# FASCICULE DE BREVET EUROPEEN

(11) **EP 2 358 788 B1**
(45) Date de publication et mention de la délivrance du brevet: **20.02.2019**
(21) Numéro de dépôt: 09799144.2
(22) Date de dépôt: 11.12.2009
(51) Int. Cl.: C08G 69/28, C08K 5/01, C08K 5/09, C08K 5/098

(54) **PROCEDE DE PREPARATION DE POLYMERE THERMOPLASTIQUE LUBRIFIE**
VERFAHREN ZUR HERSTELLUNG EINES GLEITMITTELHALTIGEN THERMOPLASTISCHEN POLYMERS
METHOD FOR PREPARING A LUBRICATED THERMOPLASTIC POLYMER

(30) Priorité: 19.12.2008 FR 0858830
(43) Date de publication de la demande: 24.08.2011
(73) Titulaire: Rhodia Poliamida E Especialidades Ltda, Sao Paulo - SP (BR)
(72) Inventeur: GESTEIRA, Gisela Perez, SP-04545-090 São Paulo (BR); DA SILVA, Antonio Cesar, SP-09210-010 Santo Andre (BR)
(74) Mandataire: Schuck, Alexander
(86) Numéro de dépôt international: PCT/IB2009/007716
(87) Numéro de publication internationale: WO 2010/070409

(56) Documents cités:
- EP-A- 0 934 979
- EP-A1- 1 179 568
- WO-A1-2007/109042
- JP-A- 2000 143 975
- JP-A- 2004 091 778
- US-A- 3 252 905
- US-B1- 6 515 058

## Description

L'invention concerne un procédé de préparation d'un polyamide thermoplastique lubrifié.

L'invention concerne plus particulièrement un procédé de préparation de polyamide lubrifié selon lequel au moins un lubrifiant est introduit dans le polymère à l'état fondu lors du procédé dè polymérisation du polymère.

Les polymères thermoplastiques, en particulier les polyamides, sont des polymères présentant un intérêt industriel et commercial important. Les polyamides thermoplastiques en particulier sont obtenus soit par réaction entre deux monomères différents, soit par polycondensation d'un seul monomère. L'invention s'applique d'une part aux polyamides issus de deux monomères différents, dont le polyamide le plus important est le poly(hexaméthylène adipamide). L'invention s'applique d'autre part aux polyamides issus d'un seul monomère, dont le polyamide le plus important est le polycaprolactame.

La fabrication de polymères, en particulier de type polyamide, est principalement effectuée par polycondensation à partir des monomères, généralement par chauffage à température et pression élevées d'une solution aqueuse des monomères.

Les polymères ainsi fabriqués, en particulier les polyamides, principalement sous forme fondue, sont ensuite généralement mis sous forme de granulés.

Ces granulés sont ensuite utilisés dans un grand nombre d'applications, notamment pour la fabrication de fils, fibres ou filaments, ou pour des mises en forme d'articles par moulage, injection, extrusion. Ils peuvent notamment être utilisés dans le domaine des plastiques techniques, généralement après une étape de formulation. Ces granulés, pour être mis définitivement sous forme d'articles tels qu'articles moulés etc., et pour être formulés, sont généralement refondus.

Les polyamides sont manipulés à l'état fondu lors de ces mises en forme et formulations, ce qui n'est pas toujours aisé. En effet les polyamides peuvent présenter une viscosité importante à l'état fondu, et ils peuvent adhérer en partie aux surfaces des installations dans lesquelles ils sont introduits, ce qui est problématique.

Pour remédier à cela, if est connu d'ajouter au polymère, en particulier au polyamide, un lubrifiant.

Une méthode d'introduction du lubrifiant est connue, qui consiste à déposer le lubrifiant sur les granulés de polymère. Les granulés sont ensuite refondus pour être mis en forme. Cette méthode est complexe et implique, dans le procédé de préparation de polymère lubrifié, une étape supplémentaire de dépôt du lubrifiant sur les granulés, ce qui engendre un coût.considérable.

Une autre méthode d'introduction du lubrifiant consiste à introduire le lubrifiant lors d'une étape de formulation, par refusion de granulés de polymère et ajout du lubrifiant dans le polymère fondu. Cette méthode est complexe, car elle implique une étape de refusion du polymère.

WO 2007/109042 A1 décrit une composition de polymère de chlorure de vinyle rigide résistant aux chocs comprenant
un polymère de chlorure de vinyle ;
une composition de modificateur de la résistance aux chocs comprenant un polymère d'oléfine chloré et un copolymère d'éthylène/alpha-oléfine ; et
une composition de lubrifiant qui est un mélange d'acide stéarique, d'une cire de paraffine et d'un savon métallique sélectionné parmi le stéarate de calcium, le stéarate d'aluminium, le stéarate de cuivre, le stéarate de lithium, le stéarate de magnésium, le stéarate de sodium, le stéarate de zinc et le combinaisons de ceux-ci.

La composition de polymère est préparée par mélange homogène du polymère de chlorure de vinyle, de la composition de modificateur de la résistance aux chocs et de la composition de lubrifiant. La composition de lubrifiant n'est pas ajoutée lors du procédé de polymérisation des polymères.

L'invention propose un procédé simple et économique, ne présentant pas les inconvénients ci-dessus.

A cet effet, l'invention propose un procédé de préparation de polymère thermoplastique lubrifié, au moins un lubrifiant étant introduit dans le polymère à l'état fondu lors du procédé de polymérisation du polymère, charactèrisé en ce que le lubrifiant est un mélange de paraffine, d'acide gras et de sel métallique d'acide gras et en ce que le polymère thermoplastique est un polyamide.

Par « polymère » on entend un polymère ou un prépolymère. Ce terme exclut les monomères.

Comme polyamides thermoplastiques préférés de l'invention, on peut citer les polyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères.

Plus précisément, ces copolyamides peuvent être, par exemple, le polyadipamide d'hexaméthylène, les polyphtalamides obtenus à partir d'acide téréphtalique et/ou isophtalique tels que le polyamide commercialisé sous le nom commercial AMODEL, les copolyamides obtenus à partir d'acide adipique, d'hexaméthylène diamine et de caprolactame.

De manière plus préférée encore, le polymère thermoplastique est sélectionné dans le groupe de (co)polyamides comprenant : le polyamide 6, le polyamide 6.6, le polyamide 4, le polyamide 11, le polyamide 12, les polyamides 4-6, 6-10, 6-12, 6-36, 12-12, leurs copolymères et mélanges.

Le lubrifiant est un mélange de paraffine, d'acide gras et de sel métallique d'acide gras. Les paraffines sont sous forme de substances pures ou de mélanges industriels. Il peut s'agir d'huiles d'hydrocarbures ou de cires. Il s'agit généralement de composés hydrocarbonés aliphatiques saturés ou insaturés. Avantageusement la paraffine a un nombre moyen d'atomes de carbone compris entre 20 et 500, avantageusement entre 30 et 200.

Les acides gras et les sels métalliques d'acides gras peuvent être saturés ou insaturés.

Comme acides gras pouvant convenir dans le cadre de l'invention, on peut citer les acides gras comprenant au moins 16 atomes de carbone. A titre d'exemples de tels acides gras on peut citer l'acide laurique, l'acide myristique, l'acide palmitique, l'acide stéarique, l'acide alginique, l'acide béhénique, l'acide lignocérique, l'acide sérotinique, l'acide mélissique, l'acide eicosanique. L'acide stéarique est préféré.

Les acides gras sont avantageusement des acides carboxyliques mono- ou divalents de 6 à 24 atomes de carbone. Parmi ces acides on peut citer l'acide pélargonique, l'acide margarique, l'acide dodécanedicarboxylique.

Le sel métallique d'acide gras peut être un sel métallique de l'acide gras tel que décrit ci-dessus. A titre d'exemples de sels métalliques d'acides gras, on peut citer le stéarate d'aluminium, de calcium, de magnésium ou de zinc. On peut également citer le di stéarate d'aluminium, le tri stéarate d'aluminium etc.

Avantageusement la proportion de lubrifiant en poids par rapport au poids de polymère est comprise entre 0,1 et 5%, de préférence elle est comprise entre 0,2 et 2%, et encore plus préférentiellement elle est comprise entre 0,5 et 1,5%. Le choix de cette proportion est aisément déterminé par des essais de routine.

Le lubrifiant peut être introduit sous différentes formes dans le polymère à l'état fondu. Il peut par exemple être introduit sous forme liquide, par exemple lorsque le lubrifiant est liquide à température ambiante, ou il peut être fondu.

Il peut également être introduit sous forme solide, par exemple sous forme d'un mélange maître (« masterbatch » en anglais).

Dans le lubrifiant mélange de plusieurs composants selon l'invention, certains composants peuvent être sous forme solide et d'autres sous forme liquide.

Le lubrifiant est introduit au polyamide à l'état fondu selon toute méthode connue de l'homme du métier pour introduire un additif dans un polymère à l'état fondu.

Le procédé de l'invention concerne en particulier la fabrication de tous types de polyamides ou de copolymères à base de polyamide. Il est par exemple efficace pour la fabrication de polyamides issus de polymérisation des lactames ou des amino acides, comme le caprolactame ou l'acide 6-amino-hexanoïque, ou pour la fabrication des polyamides issus de la polymérisation entre des monomères de diacides carboxyliques et de diamines. Il est en particulier efficace pour la condensation de l'acide adipique et de l'hexaméthylène diamine. Il est adapté à la fabrication de toute composition à base de polyamide et de tout copolymère à base de polyamide.

Le polymère peut être sous la forme d'une composition à base du polymère comme matrice et comprenant des additifs tels que des agents anti-mousse etc. Ces additifs sont connus de l'homme du métier.

En outre, des limiteurs de chaîne peuvent être introduits au cours du procédé de l'invention. A titre d'exemple de limiteurs de chaîne, en peut citer l'acide acétique, l'acide benzoïque, etc...

La composition peut également comprendre d'autres composés, tels que des matifiants comme le dioxyde de titane ou le sulfure de zinc, des stabilisants chaleur ou lumière, des agents bioactifs, des agents antisalissure. Cette liste n'a aucun caractère exhaustif.

Les polymérisations à partir de monomères de diacides carboxyliques et de diamines comprennent généralement trois étapes. La première étape est la concentration d'un di-sel carboxylate-ammonium dans l'eau, appelé "sel N". Cette étape est suivie d'une amidification (condensation des fonctions acides et aminés) comprenant généralement les phases suivantes : une phase de distillation sous pression et une phase de décompression. La condensation est poursuivie ensuite sous pression atmosphérique (ou sous vide) jusqu'au degré de polymérisation désiré. Cette dernière étape est appelée finition. Le polymère est généralement ensuite extrudé ou mis en forme.

Les polymérisations à partir des lactames et des aminoacides, en particulier la fabrication du polyamide 6, peuvent comprendre une étape de mélange des monomères avec de l'eau et éventuellement des limiteurs de chaînes, une étape de chauffage, éventuellement une étape d'augmentation de la pression suivie d'une étape de décompression, éventuellement une étape de finition sous vide, généralement une étape de granulation du produit obtenu, une étape d'extraction, et une étape de séchage.

Selon un mode de réalisation particulier du procédé de l'invention, le procédé peut comprendre une polycondensation effectuée en phase fondue comprenant la solution de sel N ou le liquide comprenant les monomères, le flux réactionnel s'écoulant à faible vitesse dans la partie inférieure d'un réacteur d'axe horizontal ou dans un dispositif tubulaire. La réaction de polycondensation est ainsi effectuée à une pression d'environ 5-30 bars à une température d'environ 215-300°C. Le flux réactionnel subit ensuite une détente non adiabatique jusqu'à pression atmosphérique par passage dans un flasheur, c'est-à-dire un dispositif tubulaire chauffé présentant une surface d'échange suffisante pour éviter la cristallisation du produit. Au cours de cette opération de l'eau résiduelle contenue dans le flux de matière est vaporisée. La vapeur et le flux liquide peuvent ensuite être séparés dans un séparateur gaz-liquide. La polycondensation est poursuivie en phase fondue à pression atmosphérique ou réduite de manière à atteindre le degré d'avancement souhaité, dans un finisseur. Le temps de séjour dans le dispositif de finition en phase liquide est de préférence supérieur ou égal à 5 minutes.

Avantageusement, le procédé de l'invention comprend une phase de distillation sous pression et une phase de décompression et le lubrifiant est introduit après la phase de distillation sous pression, de préférence il est introduit après la phase de décompression.

Selon un mode de réalisation particulier du procédé de l'invention, le procédé comprend une étape de finition comprenant un dispositif de finition (appelé aussi finisseur) et le lubrifiant est introduit avant la sortie du dispositif de finition.

De façon avantageuse, la phase de décompression est réalisée par passage dans un flasher, et le lubrifiant est introduit à Centrée du flasher.

Selon un mode de réalisation préférentiel du procédé de l'invention, le lubrifiant est introduit à Centrée ou à la sortie du dispositif de finition.

Par « avant la sortie du dispositif de finition » on entend que l'introduction du lubrifiant se fait dans le dispositif de finition avant la fin de ce dispositif.

« A Centrée du flasher » au sens de la présente invention, signifie que l'introduction du lubrifiant se fait en début de l'étape de décompression par passage dans le flasher.

« A l'entrée du dispositif de finition » au sens de la présente invention, signifie que l'introduction du lubrifiant se fait dans le dispositif de finition au début de ce dispositif.

Par « à la sortie du dispositif de finition » on comprendra que l'introduction du lubrifiant se fait dans le dispositif de finition à la fin de ce dispositif.

Des moyens de mélange peuvent être utilisés lors de la mise en oeuvre du procédé de l'invention. Ces moyens sont connus de l'homme du métier.

Avantageusement le polymère n'a pas subi d'étape de refusion lorsque le lubrifiant est introduit.

Ainsi le procédé de l'invention permet d'obtenir un polyamide lubrifiéde manière simple et économique. En effet, il permet notamment d'obtenir des granulés de polyamide lubrifiésans étape supplémentaire de dépôt de lubrifiant sur les granulés. Les granulés de polymère obtenus selon le procédé de l'invention sont déjà lubrifiés, et ils peuvent directement être formulés et/ou mis en forme, sans étape supplémentaire de lubrification. Ce qui représente un avantage considérable.

De plus, le lubrifiant est introduit tardivement, de préférence le plus tardivement possible, au cours du procédé de polymérisation. Ce qui permet de conserver une grande flexibilité au niveau de l'unité de polymérisation : en effet l'ajout tardif du lubrifiant permet de continuer à produire un nombre important de grades de polymère différents (par exemple avec ou sans lubrifiant) dans une même unité de polymérisation. Une introduction précoce du lubrifiant pourrait engendrer une pollution des installations lors de changements de grade de polymère à produire, ce qui n'est pas souhaitable. Enfin, le lubrifiant introduit tardivement permet de limiter les interférences avec le processus de polymérisation.

Le procédé de l'invention peut être continu ou discontinu. De préférence, le procédé de l'invention est un procédé continu.

Le polyamide lubrifié de l'invention peut être utilisé pour la fabrication d'articles, tels que des fils, fibres et/ou filaments, films et articles moulés. Le polyamide lubrifié peut être mis en forme d'articles directement après la polymérisation, sans étapes intermédiaires de solidification et de refonte. Il peut également être mis en forme de granulés, destinés à subir une refusion pour mise en forme définitive ultérieure, par exemple pour la fabrication d'articles moulés ou pour la fabrication de fils, fibre et/ou filaments.

La présente invention a également pour objet un polyamide thermoplastique lubrifié susceptible d'être obtenu par le procédé de l'invention comprenant une phase de distillation sous pression, une phase de décompression et une étape de finition mettant en oeuvre un dispositif de finition et dans lequel le lubrifiant est introduit après la phase de distillation sous pression et avant la sortie du dispositif de finition.

Le polyamide lubrifié de l'invention est avantageusement susceptible d'être obtenu par le procédé de l'invention dans lequel le lubrifiant est introduit après l'étape de décompression.

Selon un premier mode, le polyamide lubrifié de l'invention est susceptible d'être obtenu par le procédé de l'invention dans lequel la phase de décompression a lieu par passage dans un flasher, et dans lequel le lubrifiant est introduit à l'entrée du flasher.

Selon un second mode, le polyamide lubrifié de l'invention est susceptible d'être obtenu par le procédé de l'invention dans lequel le lubrifiant est introduit à l'entrée ou à la sortie du dispositif de finition.

Le polyamide thermoplastique lubrifié selon l'invention présente des caractéristiques techniques intéressantes, notamment un faible indice de viscosité, avantageusement un indice de viscosité compris entre 105 et 125 ml/g défini selon la mesure des temps d'écoulement, à 25°C, d'une solution de polyamide de titre pondéral 5 g/L dans l'acide formique 90%.

D'autres détails ou avantages de l'invention apparaîtront plus clairement à la vue des exemples donnés ci-dessous.

### EXEMPLES

### Tests réalisés sur les polymères :

Le premier test est la mesure de l'indice de viscosité selon la mesure des temps d'écoulement, à 25°C, d'une solution de polyamide de titre pondéral 5 g/L dans l'acide formique 90%. Le second test est la mesure de la concentration en groupements terminaux, en mmol/kg par potentiométrie. Ces tests sont effectués à partir des granulés.

### Exemple 1

Une solution de sel nylon est introduite dans un évaporateur où une partie de l'eau est éliminée. La solution ainsi concentrée de sel nylon alimente ensuite un réacteur tubulaire chauffé à 280°C grâce à un fluide caloporteur. La réaction de polycondensation s'effectue et forme un prépolymère contenant encore de l'eau qu'il s'agit d'éliminer. Un mélange de prépolymère et de vapeur d'eau se forme et se dirige vers un finisseur vertical où se produit la séparation de la vapeur et du prépolymère et où la réaction continue.

On introduit une huile paraffine appelée également « white minerai oil » (numéro CAS 8042-47-5) à température ambiante à l'entrée du finisseur.

Le finisseur travaille avec un débit de 700 kg/h de PA66. Il est agité et chauffé à 280°C par un fluide caloporteur. Une partie du mélange de l'huile paraffine dans le polymère se produit dans le finisseur. Grâce à une pompe à engrenage, le polymère contenant l'huile est transféré vers un bloc filière. En aval de la pompe, un mélange de polyamide 66 et de lubrifiants dispersés dans ce polyamide est ajouté dans le polymère contenant l'huile. Ces lubrifiants sont l'acide stéarique et le stéarate d'aluminium.

Les joncs qui sortent de la filière sont refroidis et coupés à travers un système de granulation. Les granulés sont destinés à la transformation sous forme de pièces moulées, de fils ou de fibres.

Le polymère PA66 obtenu a un indice de viscosité dans l'acide formique à 90% de 135 mg/l.

### Exemple 2

Une solution de sel nylon est introduite dans un évaporateur où une partie de l'eau est éliminée. La solution ainsi concentrée de sel nylon alimente ensuite un réacteur tubulaire chauffé à 280°C grâce à un fluide caloporteur. La réaction de polycondensation s'effectue et forme un prépolymère contenant encore de l'eau qu'il s'agit d'éliminer. Un mélange de prépolymère et de vapeur d'eau se forme et se dirige vers un finisseur vertical où se produit la séparation de la vapeur et du prépolymère et où la réaction continue.

On introduit un mélange de lubrifiant comprenant de l'huile paraffine appelée également « white minerai oil » (numéro CAS 8042-47-5), de l'acide stéarique et du stéarate d'aluminium à l'entrée du finisseur.

Le finisseur travaille avec un débit de 700 kg/h de PA66. Il est agité et chauffé à 280°C par un fluide caloporteur. Une partie du mélange des lubrifiants dans le polymère se produit dans le finisseur. Grâce à une pompe à engrenage, le polymère contenant les lubrifiants est transféré vers un bloc filière.

Les joncs qui sortent de la filière sont refroidis et coupés à travers un système de granulation. Les granulés sont destinés à la transformation sous forme de pièces moulées, de fils ou de fibres.

Le polymère PA66 obtenu a un indice de viscosité dans l'acide formique à 90% de 118 mg/l.

### Exemple 3

Une solution de sel nylon est introduite dans un évaporateur où une partie de l'eau est éliminée. La solution ainsi concentrée de sel nylon alimente ensuite un réacteur tubulaire chauffé à 280°C grâce à un fluide caloporteur. La réaction de polycondensation s'effectue et forme un prépolymère contenant encore de l'eau qu'il s'agit d'éliminer. Un mélange de prépolymère et de vapeur d'eau se forme et se dirige vers un finisseur où se produit la séparation de la vapeur et du prépolymère et où la réaction continue.

On introduit un mélange de lubrifiant comprenant de l'huile paraffine appelée également « white minerai oil » (numéro CAS 8042-47-5), de l'acide stéarique et du stéarate d'aluminium en aval de la pompe à engrenage placée en aval du finisseur.

Le finisseur travaille avec un débit de 700 kg/h de PA66. Il est agité et chauffé à 280°C par un fluide caloporteur. La pompe à engrenage transfère le polymère lubrifié vers un bloc filière.

Les joncs qui sortent de la filière sont refroidis et coupés à travers un système de granulation. Les granulés sont destinés à la transformation sous forme de pièces moulées, de fils ou de fibres
Le polymère PA66 obtenu a un indice de viscosité dans l'acide formique à 90% de 135 mg/l

### Exemple 4

Une solution de sel nylon est introduite dans un évaporateur où une partie de l'eau est éliminée. La solution ainsi concentrée de sel nylon alimente ensuite un réacteur tubulaire chauffé à 250°C grâce à un fluide caloporteur. La réaction de polycondensation s'effectue et forme un prépolymère contenant encore de l'eau qu'il s'agit d'éliminer. Le prépolymère est ensuite envoyé dans un flasher et chauffé jusqu'à 280°C. Un mélange de prépolymère et de vapeur d'eau se forme et se dirige vers un finisseur horizontal où se produit la séparation de la vapeur et du prépolymère et où la réaction continue.

A travers une ouverture située au dessus du finisseur horizontal à la sortie du finisseur, on introduit un mélange de lubrifiant comprenant de l'huile paraffine appelée également « white minerai oil » (numéro CAS 8042-47-5), de l'acide stéarique et du stéarate d'aluminium.

Le finisseur travaille avec un débit de 900 kg/h de PA66. Il est agité et chauffé à 280°C par un fluide caloporteur. Une partie de la dispersion du mélange de lubrifiant dans le polymère se produit dans le finisseur. Grâce à une pompe à engrenage, le polymère contenant le mélange de lubrifiant est transféré vers un bloc filière.

Les joncs qui sortent de la filière sont refroidis et coupés à travers un système de granulation. Les granulés sont destinés à la transformation sous forme de pièces moulées, de fils ou de fibres.

### Exemple 5

Une solution de sel nylon est introduite dans un évaporateur où une partie de l'eau est éliminée. La solution ainsi concentrée de sel nylon alimente ensuite un réacteur tubulaire chauffé à 250°C grâce à un fluide caloporteur. La réaction de polycondensation s'effectue et forme un prépolymère contenant encore de l'eau qu'il s'agit d'éliminer. Le prépolymère est ensuite envoyé dans un flasher et chauffé jusqu'à 280°C. Un mélange de prépolymère et de vapeur d'eau se forme et se dirige vers un finisseur horizontal où se produit la séparation de la vapeur et du prépolymère et où la réaction continue.

A travers une boîte à vannes placée en amont du flasher (dispositif de décompression situé en amont du finisseur), on introduit un mélange de lubrifiant comprenant de l'huile paraffine appelée également « white minerai oil » (numéro CAS 8042-47-5), de l'acide stéarique et du stéarate d'aluminium.

Le flasher travaille avec un débit de 900 kg/h de PA66. En aval du flasher, le prépolymère lubrifié entre dans le finisseur où s'effectue la dernière étape de la polycondensation. L'homogénéisation du mélange de lubrifiant dans le prépolymère puis le polymère se produit dans le flasher et le finisseur. Grâce à une pompe à engrenage, le polymère lubrifié est transféré vers un bloc filière.

Les joncs qui sortent de la filière sont refroidis et coupés à travers un système de granulation. Les granulés sont destinés à la transformation sous forme de pièces moulées, de fils ou de fibres.

Le polymère PA66 obtenu a un indice de viscosité dans l'acide formique à 90% de 110 mg/l.

### Exemple 6

Une solution de sel nylon est introduite dans un évaporateur où une partie de l'eau est éliminée. Le sel de nylon concentré est alors transféré dans un réacteur fonctionnant en discontinu et progressivement chauffé jusqu'à 280°C grâce à un fluide caloporteur et selon un profil de pression qui se décompose en trois étapes : Pression constante (réaction avec distillation de l'eau), décompression, pression atmosphérique (finition de la réaction). La réaction de polycondensation s'effectue dans le réacteur.

A travers un sas placé au dessus du réacteur, on introduit au début de l'étape de finition, à pression atmosphérique, un mélange de lubrifiant comprenant de l'huile paraffine appelée également « white minerai oil » (numéro CAS 8042-47-5), de l'acide stéarique et du stéarate d'aluminium. Le réacteur fonctionne sous agitation par batch de 500 kg de PA66. L'homogénéisation du mélange de lubrifiant dans le réacteur se produit grâce à l'agitation. Après l'étape de finition, le polymère lubrifié est extrudé à travers un bloc filière. Les joncs qui sortent de la filière sont refroidis et coupés à travers un système de granulation. Les granulés sont destinés à la transformation sous forme de pièces moulées, de fils ou de fibres.

Le polymère PA66 obtenu a un indice de viscosité dans l'acide formique à 90% de 123 mg/l.

### Exemple 7

Une solution de sel nylon est introduite dans un évaporateur où une partie de l'eau est éliminée. La solution ainsi concentrée de sel nylon alimente ensuite un réacteur tubulaire chauffé à 250°C grâce à un fluide caloporteur. La réaction de polycondensation s'effectue et forme un prépolymère contenant encore de l'eau qu'il s'agit d'éliminer. Le prépolymère est ensuite envoyé dans un fiasher et chauffé jusqu'à 280°C. Un mélange de prépolymère et de vapeur d'eau se forme et se dirige vers un finisseur horizontal où se produit la séparation de la vapeur et du prépolymère et où la réaction continue.

A travers une ouverture située au dessus du finisseur horizontal, à l'entrée du dispositif de finition, on introduit un mélange de lubrifiant comprenant de l'huile paraffine appelée également « white minerai oil » (numéro CAS 8042-47-5), de l'acide stéarique et du stéarate d'aluminium.

Le fiasher travaille avec un débit de 900 kg/h de PA66. En aval du fiasher, le prépolymère lubrifié entre dans le finisseur où s'effectue la dernière étape de la polycondensation. L'homogénéisation du mélange de lubrifiant dans le prépolymère puis le polymère se produit dans le fiasher et le finisseur. Grâce à une pompe à engrenage, le polymère lubrifié est transféré vers un bloc filière.

Les joncs qui sortent de la filière sont refroidis et coupés à travers un système de granulation. Les granulés sont destinés à la transformation sous forme de pièces moulées, de fils ou de fibres.

Le polymère PA66 obtenu a un indice de viscosité dans l'acide formique à 90% de 118 mg/l et ses groupements terminaux amines (GTA) et carboxyliques (GTC) mesurés par potentiométrie atteignent les valeurs respectives de 35 et 95 mm/kg.

### Exemple 8

Une solution de sel nylon est introduite dans un évaporateur où une partie de l'eau est éliminée. La solution ainsi concentrée de sel nylon alimente ensuite un réacteur tubulaire chauffé à 250°C grâce à un fluide caloporteur. La réaction de polycondensation s'effectue et forme un prépolymère contenant encore de l'eau qu'il s'agit d'éliminer. Le prépolymère est ensuite envoyé dans un flasher et chauffé jusqu'à 280°C. Un mélange de prépolymère et de vapeur d'eau se forme et se dirige vers un finisseur horizontal où se produit la séparation de la vapeur et du prépolymère et où la réaction continue.

A travers une vanne donnant accès à l'intérieur du tuyau de sortie du polymère (après le finisseur), on introduit un mélange de lubrifiant comprenant de l'huile paraffine appelée également « white minerai oil » (numéro CAS 8042-47-5), de l'acide stéarique et du stéarate d'aluminium.

Le flasher travaille avec un débit de 900 kg/h de PA66. En aval du flasher, le prépolymère lubrifié entre dans le finisseur où s'effectue la dernière étape de la polycondensation. L'homogénéisation du mélange de lubrifiant dans le prépoiymère puis le polymère se produit dans le flasher et le finisseur. Grâce à une pompe à engrenage, le polymère lubrifié est transféré vers un bloc filière.

Les joncs qui sortent de la filière sont refroidis et coupés à travers un système de granulation. Les granulés sont destinés à la transformation sous forme de pièces moulées, de fils ou de fibres.

Le polymère PA66 obtenu a un indice de viscosité dans l'acide formique à 90% de 130 mg/l et ses groupements terminaux amines (GTA) et carboxyliques (GTC) mesurés par potentiométrie atteignent les valeurs respectives de 34 et 87 mmole/kg.

## Revendications

1. Procédé de préparation de polymère thermoplastique lubrifié dans lequel au moins un lubrifiant est introduit dans le polymère à l'état fondu lors du procédé de polymérisation du polymère, **caractérisé en ce que** le lubrifiant est un mélange de paraffine, d'acide gras et de sel métallique d'acide gras et **en ce que** le polymère thermoplastique est un polyamide.

2. Procédé selon la revendication 1, **caractérisé en ce que** la paraffine a un nombre moyen d'atomes de carbone qui est compris entre 20 et 500, avantageusement entre 30 et 200.

3. Procédé selon l'une des revendications précédentes, **caractérisé en ce que** le lubrifiant représente entre 0,1 et 5% en poids par rapport au poids de polyamide.

4. Procédé selon l'une des revendications précédentes, **caractérisé en ce que** le procédé comprend une phase de distillation sous pression et une phase de décompression, et **en ce que** le lubrifiant est introduit après l'étape de distillation sous pression.

5. Procédé selon la revendication 4, **caractérisé en ce qu'**il comprend une étape de finition comprenant un dispositif de finition et **en ce que** le lubrifiant est introduit avant la sortie du dispositif de finition.

6. Procédé selon la revendication 4 ou 5, **caractérisé en ce que** le lubrifiant est introduit après l'étape de décompression.

7. Procédé selon la revendication 4 ou 5, **caractérisé en ce que** la phase de décompression est réalisée par passage dans un flasher, et **en ce que** le lubrifiant est introduit à l'entrée du flasher.

8. Procédé selon la revendication 5, **caractérisé en ce que** le lubrifiant est introduit à l'entrée ou à la fin du dispositif de finition.

9. Procédé selon l'une des revendications précédentes, **caractérisé en ce que** le polymère, lorsque le lubrifiant est introduit, n'a pas subi d'étape de refusion.

10. Polyamide thermoplastique lubrifié susceptible d'être obtenu par le procédé selon la revendication 5.

11. Polyamide thermoplastique lubrifié selon la revendication 10, **caractérisé en ce que** le lubrifiant est introduit après l'étape de décompression.

12. Polyamide thermoplastique lubrifié selon la revendication 10, **caractérisé en ce que** la phase de décompression a lieu par passage dans un flasher, et **en ce que** le lubrifiant est introduit à l'entrée du flasher.

13. Polyamide thermoplastique lubrifié selon la revendication 10, **caractérisé en ce que** le lubrifiant est introduit à l'entrée ou à la fin du dispositif de finition.

14. Polyamide thermoplastique lubrifié selon l'une quelconque des revendications 10 à 13, **caractérisé en ce qu'**il présente un indice de viscosité compris entre 105 et 125 ml/g défini selon la mesure des temps d'écoulement, à 25°C, d'une solution de polyamide de titre pondéral 5 g/l dans l'acide formique à 90 %.

## Patentansprüche

1. Verfahren zur Herstellung eines gleitmittelhaltigen thermoplastischen Polymers, bei dem man während des Verfahrens zur Polymerisation des Polymers mindestens ein Gleitmittel in das schmelzflüssige Polymer einträgt, **dadurch gekennzeichnet, dass** es sich bei dem Gleitmittel um eine Mischung von Paraffin, Fettsäure und Fettsäuremetallsalz handelt und es sich bei dem thermoplastischen Polymer um ein Polyamid handelt.

2. Verfahren nach Anspruch 1, **dadurch gekennzeichnet, dass** das Paraffin eine durchschnittliche Zahl von Kohlenstoffatomen aufweist, die zwischen 20 und 500, vorteilhafterweise zwischen 30 und 200, liegt.

3. Verfahren nach einem der vorhergehenden Ansprüche, **dadurch gekennzeichnet, dass** das Gleitmittel zwischen 0,1 und 5 Gew.-%, bezogen auf das Gewicht des Polyamids, ausmacht.

4. Verfahren nach einem der vorhergehenden Ansprüche, **dadurch gekennzeichnet, dass** das Verfahren eine Druckdestillationsphase und eine Entspannungsphase umfasst und das Gleitmittel nach der Druckdestillationsphase eingetragen wird.

5. Verfahren nach Anspruch 4, **dadurch gekennzeichnet, dass** es einen Konfektionierungsschritt mit einer Konfektionierungsvorrichtung umfasst und das Gleitmittel vor dem Ausgang der Konfektionierungsvorrichtung eingetragen wird.

6. Verfahren nach Anspruch 4 oder 5, **dadurch gekennzeichnet, dass** das Gleitmittel nach dem Entspannungsschritt eingetragen wird.

7. Verfahren nach Anspruch 4 oder 5, **dadurch gekennzeichnet, dass** die Entspannungsphase durch Durchgang durch einen Flasher durchgeführt wird und das Gleitmittel am Eingang des Flashers eingetragen wird.

8. Verfahren nach Anspruch 5, **dadurch gekennzeichnet, dass** das Gleitmittel am Eingang oder am Ende der Konfektionierungsvorrichtung eingetragen wird.

9. Verfahren nach einem der vorhergehenden Ansprüche, **dadurch gekennzeichnet, dass** das Polymer dann, wenn das Gleitmittel eingetragen wird, keinen Wiederaufschmelzungsschritt durchlaufen hat.

10. Gleitmittelhaltiges thermoplastisches Polyamid, das durch das Verfahren nach Anspruch 5 erhältlich ist.

11. Gleitmittelhaltiges thermoplastisches Polyamid nach Anspruch 10, **dadurch gekennzeichnet, dass** das Gleitmittel nach dem Entspannungsschritt eingetragen wird.

12. Gleitmittelhaltiges thermoplastisches Polyamid nach Anspruch 10, **dadurch gekennzeichnet, dass** die Entspannungsphase durch Durchgang durch einen Flasher erfolgt und das Gleitmittel am Eingang des Flashers eingetragen wird.

13. Gleitmittelhaltiges thermoplastisches Polyamid nach Anspruch 10, **dadurch gekennzeichnet, dass** das Gleitmittel am Eingang oder am Ende der Konfektionierungsvorrichtung eingetragen wird.

14. Gleitmittelhaltiges thermoplastisches Polyamid nach einem der Ansprüche 10 bis 13, **dadurch gekennzeichnet, dass** es eine gemäß der Messung der Durchlaufzeiten einer Polyamidlösung mit einem Gewichtsanteil von 5 g/l in 90%iger Ameisensäure bei 25 °C bestimmte Viskositätszahl zwischen 105 und 125 ml/g aufweist.

## Claims

1. Process for preparing a lubricated thermoplastic polymer in which at least one lubricant is introduced into the polymer in the melt state during the polymerization process of the polymer, **characterized in that** the lubricant is a mixture of paraffin, fatty acid and fatty acid metal salt and **in that** the thermoplastic polymer is a polyamide.

2. Process according to Claim 1, **characterized in that** the paraffin has an average number of carbon atoms which is between 20 and 500, advantageously between 30 and 200.

3. Process according to one of the preceding claims, **characterized in that** the lubricant represents between 0.1% and 5% by weight relative to the weight of polymer.

4. Process according to one of the preceding claims, **characterized in that** the process comprises a pressurized distillation phase and a decompression phase, and **in that** the lubricant is introduced after the pressurized distillation step.

5. Process according to Claim 4, **characterized in that** it comprises a finishing step comprising a finishing device and **in that** the lubricant is introduced before the outlet of the finishing device.

6. Process according to Claim 4 or 5, **characterized in that** the lubricant is introduced after the decompression step.

7. Process according to Claim 4 or 5, **characterized in that** the decompression phase is carried out by passing into a flasher, and **in that** the lubricant is introduced at the inlet of the flasher.

8. Process according to Claim 5, **characterized in that** the lubricant is introduced at the inlet or at the outlet of the finishing device.

9. Process according to one of the preceding claims, **characterized in that** the polymer, when the lubricant is introduced, has not undergone a remelting step.

10. Lubricated thermoplastic polyamide capable of being obtained by the process according to Claim 5.

11. Lubricated thermoplastic polyamide according to Claim 10, **characterized in that** the lubricant is introduced after the decompression step.

12. Lubricated thermoplastic polyamide according to Claim 10, **characterized in that** the decompression phase takes place by passing into a flasher, and **in that** the lubricant is introduced at the inlet of the flasher.

13. Lubricated thermoplastic polyamide according to Claim 10, **characterized in that** the lubricant is introduced at the inlet or at the outlet of the finishing device.

14. Lubricated thermoplastic polyamide according to any one of Claims 10 to 13, **characterized in that** it has a viscosity number between 105 and 125 ml/g defined according to the measurement of the flow times, at 25°C, of a polyamide solution having a weight content of 5 g/l in 90% formic acid.
